# EUROPEAN PATENT APPLICATION

(11) **EP 2 770 462 A1**
(43) Date of publication of application: **27.08.2014**
(21) Application number: 13155878.5
(22) Date of filing: 20.02.2013
(51) Int. Cl.: G06Q 10/06, G06Q 30/02

(54) **Establishing quality of an information system**

(71) Applicant: Qentinel Oy, 02600 Espoo (FI)
(72) Inventor: Hannula, Esko, 02600 Espoo (FI)
(74) Representative: Kolster Oy Ab

(57) **Abstract**

The invention relates to a method and apparatus of valuing quality of an information system. It comprises the steps of obtaining data needed for valuing quality of an information system by receiving (2-44) data from the information system; obtaining from the received data values for at least two dimensions together representing the quality of the information system and each dimension being measured by one or more meters, the obtaining comprising at least the following: measuring by a first meter a first quantity value whose magnitude is indicated by a first measurement unit; measuring by a second meter a second quantity value, whose magnitude is indicated by a second measurement unit, the second measurement unit being different from the first measurement unit; and storing (2-60) the measured quantity values to a data warehouse (1-50).

## Description

### FIELD OF THE INVENTION

The present invention relates to information systems and more particularly to a method, an apparatus and a system of determining quality of an information system.

### BACKGROUND OF THE INVENTION

An information system (IS) is any combination of information technology and people's activities using that technology to support operations, management, and decision-making. An information system uses an integrated set of components for collecting, storing, and processing data and for delivering information, knowledge, and digital products. IS comprises data processing apparatus, data transfer apparatus and programs. The purpose of the information system is to increase or facilitate some action or make it possible in general with the help of the data processing.

The value, usefulness and profitability of the information system can be seen as a function of its success factors. These success factors include e.g. the quality of information and the quality of a service, and as regards to the aims of the information system, it is to provide high quality services to the customers of said system. The quality in the service can be seen as applications, which meet the objectives of business, which function as part of the business processes according to plans and are user-friendly. The system has to be of high quality both in its technical features and in relation to information and quality of the service to provide value to users.

In other words, quality in information systems positively correlates with the success of the system, during its whole life-cycle. Moreover, success is considered a state where an information system creates an intended business value.

Consequently, a business value approach to information system quality states that quality depends on the ability of the information system to produce the intended business value. Thus, good quality can be perceived as a vital element on the path to IS success.

The intended value naturally derives from business objectives since information systems ultimately exist to support business objectives. It is important to note, however, that actually realizing the value requires more than just meeting the business objectives. For instance, a system that is built on time and budget, meets the technical requirements, and supports the predefined business objectives, can appear successful but is, in fact, of poor quality unless it is also accepted by the end-users.

There are many kinds of value in addition to economic value. For example, medical software that can aid physicians in diagnosing illnesses has enormous value for health care, but this kind of value is not exactly economic value. Software that improves national security or military effectiveness is also extremely valuable, but this kind of value is in addition to its economic value. Both of these benefits can be considered as business value to the stakehold-ers of the information system.

Some methods to measure the quality of information systems have been developed. For instance, the reliability of IS can be measured by different control programs, which reveal failures as service deviations. For example, in a model based on COBIT (Control Objectives for Information and Related Technologies) frame of reference, the functionality of service processes and the development of performance of service processes of information management and service providers can be measured. These measurements are made with the help of target indicators, which relate to information management processes.

One of the problems associated with COBIT, and other existing arrangements to measure quality, is that the prior art methods do not describe the value of information system reliably and clearly. For instance, a drawback of the so-called DeLone-McLean IS success model is that the model does not take into consideration the original goals of a client in relation to the system. The problem with the COBIT system is the interpretation of the reports.

No prior art method can combine and make commensurable quality information of different types and from different sources, when information is in addition measured at different intervals and includes both technical and non-technical data.

The document US 2012/0166888 A1 describes a method and software program product for determining the quality of an information technology system. In it a total score value for the information technology system is calculated from different score values ascertained independently of one another. The different score values are measures for deviations of the quality of the hardware units or the software modules from first predefinable target values. The total score value is a measure of a deviation of the quality of the information technology system from a second predefinable target value.

The document US 2012/0120078 A1 describes a method for displaying system performance information. The method comprises normalizing data representative of an operation performed by a system, displaying a first object indicative of a duration of the operation, displaying a second object with the first object and displaying an event marker with the first and second objects, the first object, the second object and the event marker aligned along a same time line in a same graph.

The document US 2000/6055493 A describes a process for measuring performance and monitoring service quality of an information system, this process comprising a process for acquiring data within the information system, a process for processing the data and calculating Indicators, and a supply of reports on the performance and/or the service quality within this information system. It further comprises a process for homogenizing acquired data originating from various data sources, in particular: 1) data acquired by real-time polling; 2) data, in particular continuous or discrete data or events, acquired in real time from an external source; and 3) data, in particular continuous or discrete data or events, acquired in deferred time from an external source.

### BRIEF DESCRIPTION OF THE INVENTION

It is thus an object of the present invention to provide a method and an apparatus for implementing the method so as to solve the above problems. The objects of the invention are achieved by a method and an arrangement, which are characterized by what is stated in the independent claims. The preferred embodiments of the invention are disclosed in the dependent claims.

The invention is based on the idea of making commensurable different measured quantities of the information system with different measurement units. In other words, different data and/or information can be combined in an intelligent way based on measurements of the system by a plurality of meters. The resulting value can be described as one value in a function of time that represents the quality, or in other words, the business value that the information system is meant to create, at a point in time. This allows one to make different decisions concerning the information system.

### BRIEF DESCRIPTION OF THE DRAWINGS

In the following the invention will be described in greater detail by means of preferred embodiments with reference to the attached drawings, in which
Figure 1a shows a block diagram according to an embodiment of the invention;
Figure 1b shows a signalling diagram according to an embodiment of the invention;
Figure 1c shows a further signalling diagram according to an embodiment of the invention;
Figure 2 shows one embodiment of the calculation process in the metrics and analysis layer of the invention; and
Figure 3 shows a flow chart according to the metrics and analysis layer of the invention and its embodiments.

### DETAILED DESCRIPTION OF ONE EMBODIMENT OFTHE INVENTION

In the following, the invention and its embodiments will mainly be described in connection with an information system IS comprising one or more information technology systems, communications systems and access networks. The information system can be any information system comprising hardware and/or software in different data processing apparatus, data transfer apparatus and programs, any combination of information technology and people's activities using that technology to support operations, management, and decision-making.

Said information system can thus be defined to be a network of many different information and/or communications systems and methods. However, the invention and its embodiments are not restricted to the number of information technology systems or communications systems or access networks. Also, regarding the invention, the operation and structure of information technology systems, communications systems and access networks are described only to a degree that will assist in comprehending the invention and its embodiments.

The invention and its embodiments are not specific to the particular information technology systems, communications systems and access networks, but it will be appreciated that the present invention and its embodiments have application in many system types and may, for example, be applied in a circuit switched domain e.g. in GSM (Global System for Mobile Communications) digital cellular communication system, in a packet switched domain, e.g. in the UMTS (Universal Mobile Telecommunications System) system, and e.g. in networks according to the IEEE 802.11 standards: WLAN (Wireless Local Area networks), HomeRF (Radio Frequency) or BRAN (Broadband Radio Access Networks) specifications (HIPERLAN1 and 2, HIPERACCESS). The invention and its embodiments can also be applied in ad hoc communications systems, such as an IrDA (Infrared Data Association) network or a Bluetooth network. In other words, the basic principles of the invention can be employed in combination with, between and/or within any mobile communications systems of 2^{nd}, 2,5^{th}, 3^{rd}, and 4^{th} generation, such as GSM, GPRS (General Packet Radio Service), TETRA (Terrestrial Trunked Radio), UMTS systems, HSPA (High Speed Packet Access) systems e.g. in WCDMA (Wideband Code Division Multiple Access) technology, and PLMN (Public Land Mobile Network) systems. Different meters can be used in the information system with wireless network(s) and in the information system with wired network(s). The meters can also be used in other parts of the information system e.g. when making user satisfaction surveys.

Communications technology using IP (Internet Protocol) protocol can be e.g. the GAN technology (General Access Network), UMA (Unlicensed Mobile Access) technology, the VoIP (Voice over Internet Protocol) technology, peer-to-peer networks technology, ad hoc networks technology and other IP protocol technology. Different IP protocol versions or combinations thereof can be used.

The user equipment that can use the information technology system can be e.g. a conventional user equipment that can connect to a wireless local area network. The user equipment can be equipped with a wireless local area network service and/or capable to communicate any other short-range communications media. A wireless local area network WLAN is a network in which the mobile user can connect to the local area network through a wireless connection. This kind of user equipment can be described as two-mode user equipment.

The user equipment can comprise means for processing e.g. at least one of the following messages: a short message, an instant message, an e-mail message, a multimedia message, a unified messaging message, a WAP (Wireless Application Protocol) message or an SIP (Session Initiation Protocol) message. The mobile stations can also be mobile stations equipped with e.g. an instant message, an e-mail message, a multimedia message, a unified messaging message, a WAP message or an SIP message service and the services like voice calls, wireless Internet browsing, and web broadcasting, and these messages and message services can be used when using IS.

A computer program comprising program code means adapted to perform any necessary steps, when the program is run on a processor can implement the invention and its embodiments. Also different kind of mapping procedures and transmitting of information are possible using one or more computer programs. It also is possible to have a computer program product comprising program code means stored in a computer readable medium, the program code means being adapted to perform any of said steps, when the program is run on a computer or on a processor.

All modifications and configurations required for implementing functionality of the embodiments may be performed as routines, which may be implemented as added or updated software routines, application circuits ASIC and/or programmable circuits. Software routines, also called program products, including applets and macros, can be stored in any apparatus-readable data storage medium and they include program instructions to perform particular tasks. Software routines may be downloaded into an apparatus. The apparatus, such as controllers, or corresponding server components, or a user terminal may be configured as a computer including at least a memory for providing storage area used for arithmetic operation and an operation processor for executing the arithmetic operation. An example of the operation processor includes a central processing unit. The memory may be removable memory detachably connected to the apparatus or to IS.

The invention and its embodiments establish and provide a value to the quality of the information system. The quality of IS can be presented as a computational value provided in a specific form. The development or a trend of the value of the information system can be measured, followed and monitored in a concrete way as a function of time. This can be done starting from the beginning of the information system's life-cycle, including a planning and requirements phase.

The invention and its embodiments turn the evaluation process of said quality to a different direction, because traditionally quality has been evaluated through the costs caused by bad quality. Now quality can be computed and evaluated with the help of quality meters.

The capability of information systems to generate value comprises e.g. the following factors: the system is implemented and operated effectively, it is fulfils the specified requirements, it is accepted by the end-users and it suits the needs of the business.

The quality of the information system can be established and measured as a function of dimension, perspectives, zones, or data sources. Said dimensions, perspectives, zones, or data sources can have many technical aspects. In addition to these technical aspects the dimensions can have one or more non-technical aspects, which can be called soft meters, like the usability of the system. These non-technical aspects can be said to be such quantities that cannot be measured in a first step with the SI units as separated to so-called hard meters. It can be said that now hard meters and soft meters can be combined.

The dimension can be defined as a construct whereby objects or individual quantities can be distinguished. These dimensions can define the variables or parameters for the quality. The variables can change slowly or rapidly as a function of time, and some of the variables can even have a constant value. A low frequency change can occur e.g. weekly, yearly and a high frequency change can occur e.g. in every second or even faster than that. Data with low frequency change can be e.g. user evaluation data and data with high frequency change can be e.g. data produced by a network monitoring system. The number of the dimensions is normally between two and seven, preferably between three and five and most preferably four. The dimensions and their number can be predefined, but one can also remove or add dimensions to the calculation of the quality of the information system in real time.

The meters can be reflective meters and/or formative meters. The meters can measure only one quantity or alternatively they can measure multiple quantities.

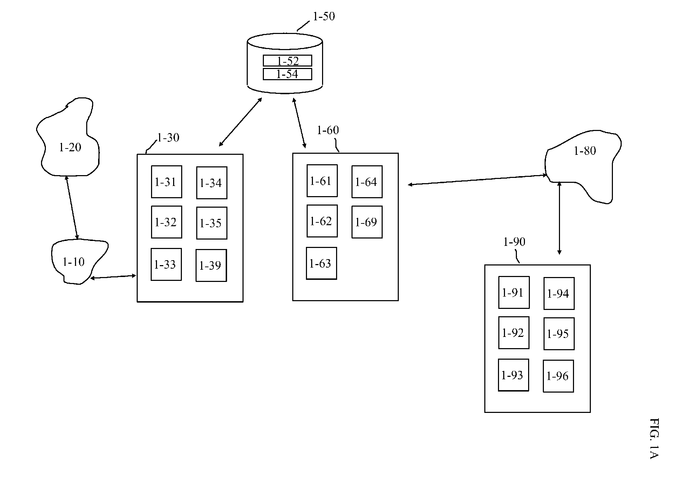

Figure 1a shows a block diagram according to an embodiment of the invention. A company has an information system 1-10. This can be e.g. an e-commerce system or an enterprise resource planning system. The information system can have many users 1-20. The users can be internal and/or external to the system. The internal users are those like in said enterprise resource planning system and the external users those like in said e-commerce system, but as mentioned, said systems can also have both internal users and external users

The quality of the information system can be viewed and followed with many different tools. These tools, called quality intelligence tools QI, 1-30, can comprise e.g. network monitor programs 1-31, programs measuring the performance of the information system 1-32, tools of statistical or static code analysis 1-33, user feedback tools 1-34, testing automation tools 1-35 and other tools 1-39.

The tools provide data and/or information, which can be sent or conveyed to a data warehouse 1-50, and stored therein. The data warehouse can be e.g. a database external or internal to the information system.

A so-called ETL (Extract, Transform, Load) process 1-54 can be included in the storing step. With the help of this data consolidation and integration process, data can be stored to the data warehouse according to a QI data model 1-52. The data model defines the data format of the data to be stored. It can also create a structure to the data and/or information provided by the information system. In this phase, it is also possible to handle the data and combine it seamlessly independent of the original source of the data/information.

In the invention and its embodiments, the layer 1-60 represents QI metrics and analysis layer. The layer provides the intelligence of the system. The layer can comprise a bundle of meters or instrumentations. It can be divided into four different dimensions, perspectives, zones, or data sources, but it can comprise less than four or more than four dimensions, perspectives, zones, or data sources. Whether there are more 1-69 or less dimensions, depends at least partly on the system to be followed.

The dimensions presented in Figure 1a can be technical quality 1-61, process quality 1-62, perceived or experienced quality 1-63, and business quality 1-64. The business quality can also be defined to be utility and/or usefulness. Also other quality dimensions 1-69 can be defined and used e.g. in real time. This QI metrics and analysis layer can provide a single figure representing the quality of the information system by using the method, apparatus, and system of the invention and its embodiments. The method can also be called a quality intelligence method. The calculation of said figure will be described in detail, in the following.

The layer 1-80 shown in Figure 1a is a so-called QI dashboard layer. It can provide the users of a QI system a real time view of the value of the quality of the information system.

The QI system can have many different users or user roles 1-90, and the users can see a view of the quality of the system, which is important to them. The users or user groups can comprise CEOs (chief executive officer) 1-91, CIOs (chief information officer) 1-92, CFOs (chief financial officer) 1-93, customer service 1-94, project managers 1-95, and other users 1-96. The users can select the view or adapt it to some specific purposes suitable to them.

All or some of the layers 1-30, 1-50, 1-60 1-80 and 1-90 can also be part of the information system.

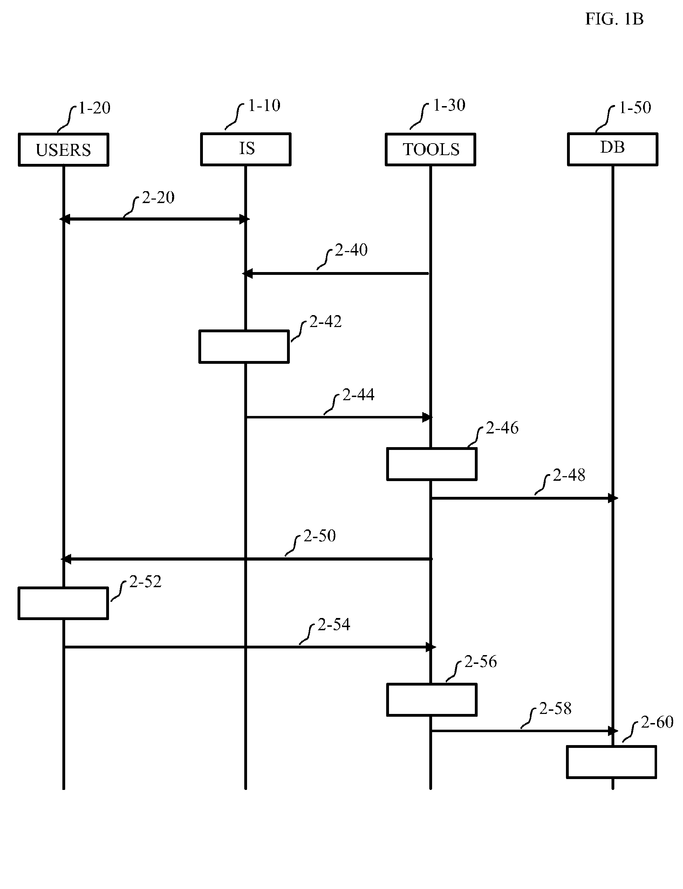

The data warehouse of the information system can be in a two-way connection or communication with the tools layer and with the metrics and analysis layer. The user roles layer can be linked to the dashboard, which can be linked to metrics and analysis layer, both of said links being either single-way links or multi-way links. Alternatively or in addition to the links of the QI metrics and analysis to the data warehouse shown in Figure 1a, the QI metrics and analysis 1-60 can have one or more direct links to the information system 1-10 and/or to one or more other external information systems. In Figure 1b, the users of the information system are linked to the information system, which is in turn linked to the data warehouse via or through the QI tools layer. These links can also be two-way links.

The blocks on the QI tools layer can be independent blocks each processing a measurement of the information system independently of the other meters. This means that each meter can take a sample of the information flow and/or data flow of the information system. Alternatively, a meter can use the result of the other meter as a starting point of its measurements.

The blocks on the QI metrics and analysis layer can be independent blocks and can comprise independent meters.

Figure 1b shows a signalling diagram according to an embodiment of the invention. In it, the users of the information system 1-20 can use the information system for many different purposes. E.g. in the e-commerce systems, the user or a consumer can search for a product and make different purchase events 2-20 for obtaining a service or a product. The QI tools follow the information system, in this case an e-commerce system, and its functionality. Different data and/or information can be measured. In one example, information on web page response times and/or the amount of purchase events can be collected and received 2-42 on the information system. There can be lots of these kinds of issues to be monitored, and the monitoring can occur in very frequent intervals. The monitoring must then be efficient and automated.

In one embodiment, the information system receives 2-40 a request from the QI tools 1-30 and processes 2-42 the request. The information system 1-10 can return 2-44 the requested and needed data to the QI tools layer 1-30. The tools layer can further process 2-46 the received data, or leave it unprocessed, and can then convey 2-48 data to the database or the data warehouse. The database 1-50 can comprise all or part of the monitored data that the one or more tools have collected. The received data can also be store as such, as originally measured.

The different QI tools can also collect data directly from the end users 1-20 of the different systems. E.g. electrical customer feedback tools can collect quantitative and qualitative data on the user experience. In this case, the tools can send 2-50 a request for this kind of data to the end user, the end user can give 2-52 his opinion on the requested items, and the opinions can be returned and transferred 2-54 to the QI tool. Finally, the QI tool can process 2-56 the received data or leave it unprocessed, and transmit 2-58 it to the database 1-50 storing 2-60 the data.

The tools can comprise one or more meters, e.g. a bundle of meters, for measuring and/or receiving and/or obtaining data and/or information e.g. from the information technology system and/or directly from the users.

The tools can also be used separate from the above-mentioned uses. This means that the tools are used as independent systems without combining the data and without making the data commensurate. Consequently, for instance, only network monitoring data or only user feedback data can be viewed in the QI dashboard. Each tool can have its own report view to which e.g. the user of the QI dashboard can refer and to which the user can send a request.

As mentioned above, in the method of the invention and its embodiments, data received and collected 2-44, 2-54 by the QI tools can be transferred 2-48, 2-58 to the database. The database can be a centralized database. The transferred data can be processed through a data consolidation and integration process in order to create more consistent and accurate information from the data. After that data can be stored to a database according to a predefined QI data model that defines the data format of the data to be stored and creates a structure to the stored data. This can benefit the process in the metrics and analysis 1-60 layer. Data can also be store in the database 1-50 without a data model or in addition to storing it according to a data model.

Handling the data in this manner makes it possible to analyse data and information in real time and in an intelligent way.

The data and/or information obtained or received and the value created by the invention and its embodiment can, for instance, be used in improving efficiency, in improving the effectiveness, and in developing the information system further. In e-commerce systems, purchase events per end-user can be increased e.g. by reducing an extranet or an intranet of the www (World Wide Web) server response time or other server response time, which is needed for a shopping event, such as the response time of adding an item to a shopping cart. The invention and its embodiments can provide data or information e.g. as a signal or e.g. display information for allowing a QI system user 1-90 to detect a drop in quality, i.e. drop in business value created by the monitored information system. Consequently, the user is able to react to the problem in the information system caused by e.g. that the value of one quantity is under its target value. Thus, the user can use the invention to identify the cause of the problem, in this case, the too-long response time of a shopping event. As a result, proactive decisions can be made to eliminate bottlenecks in the purchase process, and increase the amount of purchase events per end-user. The invention and its embodiments can also be applied to many other different information systems, like in municipal or local transactions systems, e.g. to hospital information systems.

The invention also makes it possible for one to react before actual problems occur in the information system. For instance, a prediction of a drop in quality can be displayed on the QI dashboard when the metrics and analysis layer 1-60 of the QI system recognizes a pattern of events or measurement results that before, in the life-cycle of this information system or a similar system that can be used as a baseline, lead to an increased response time and thus, to a loss of customers.

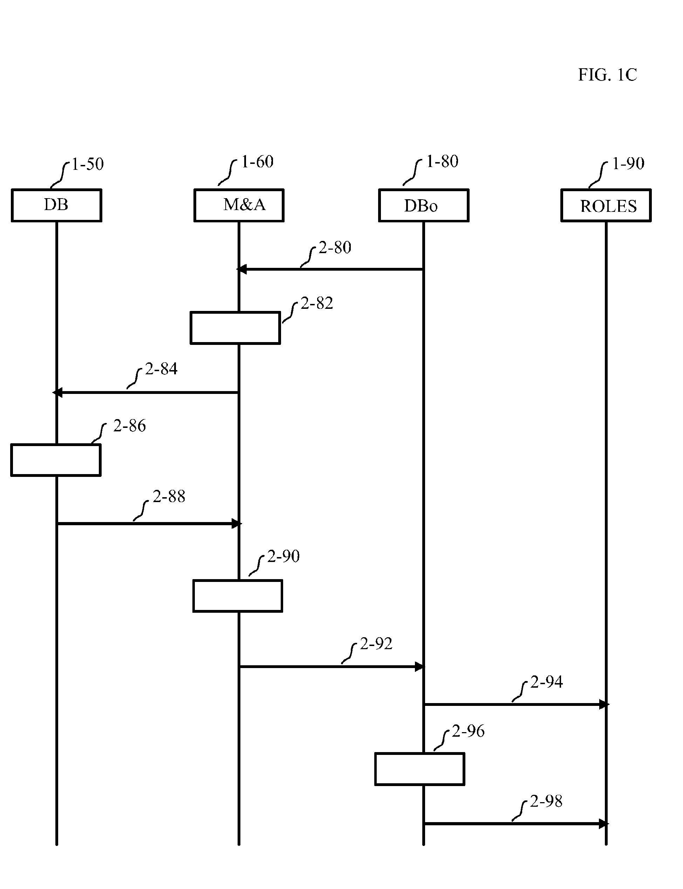

Figure 1c shows a further signalling diagram according to an embodiment of the invention. The QI system can provide a view, which is based on the information produced by the layer QI metrics and analysis. In the first phase the dashboard can send 2-80 a request to the layer QI metrics and analysis. The layer can then make an analysis according to the invented method and its embodiments.

Said layer 1-60 can select 2-82 the meters to be used and send 2-84 a request to the database on data relating to the meters. The database can then receive the request and process 2-86 the request, and after that return 2-88 the requested data to the metrics and analysis layer 1-60.

In other words, the QI metrics and analysis layer receives in step 2-88 data from the data warehouse, e.g. from the database. Alternatively or in addition to that, it can also receive data from other sources. A meter can also directly forward the measured data to the QI metrics and analysis layer. The received data can thus be real time data describing a feature or characteristics of the system in real time. The data received from the data warehouse can be the latest data or data prior to the latest data.

After receiving 2-88 the data, an analysis on the data can made in step 2-90. The analysis can be based on target values and weighted values of the meters. The QI metrics and analysis system 1-60 can then return in step 2-92 information needed to produce the required dashboard view to the QI dashboard layer.

The user of the QI system can see and follow the state of the quality of the information system. The value representing quality can be seen e.g. in a so-called dashboard view after the user has requested 2-94 the view, after the view has been generated 2-96 and returned 2-98 to the user. The view can be viewed in any kind of terminal apparatus, e.g. with an internet browser, like a mobile phone, a computer, or a tablet. The QI dashboard can present a view, which the user can choose and which is suitable to the monitoring purpose of the system in question.

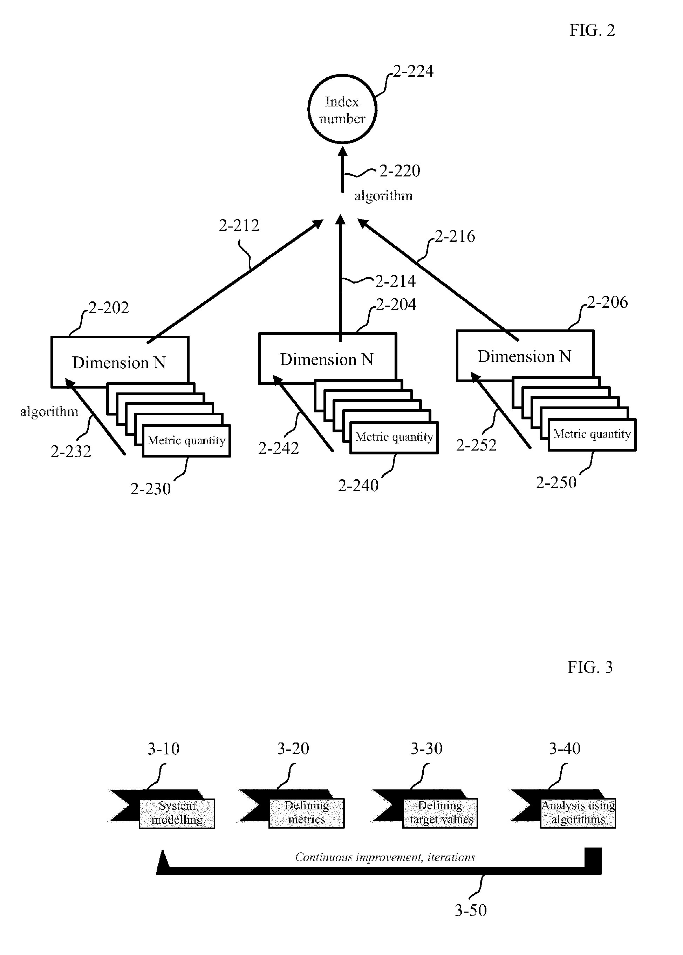

Figure 2 shows one embodiment of the invention, which embodiment can be processed in the metrics and analysis layer 1-60 or in association with said layer. Figure 2 shows three dimensions 2-202, 2-204 and 2-206 although the number of dimensions can be more than three or less than three. The values of the dimensions can be received 2-212, 2-214, 2-216 and used in the process of the index number 2-224 according to one or more algorithms 2-220. As shown in Figure 2, each dimension can be constructed according to one or more dimension algorithms 2-232, 2-242, 2-252, which algorithms can be the same or different for each dimension. The dimension algorithms can use or apply one or more metric quantities 2-230, 2-240, 2-250 as shown in Figure 2 in the calculation of each dimension.

The index number algorithm and the dimension algorithms can all be the same algorithms or at least some of them can be different algorithms. Thus, in one embodiment a first dimension algorithm, a second dimension algorithm and a third dimension algorithm and the fourth index number algorithm is used. According to another embodiment all dimension algorithms are same algorithms and the index number algorithm is a different algorithm.

Figure 3 shows one embodiment of the invention, which embodiment can be processed in the metrics and analysis layer 1-60 or in association with said layer. The flow chart of Figure 3 has four steps, but it can also have more than four steps or less than four steps. In the first step 3-10 the information system is modelled. This modelling can be based at least partly on the history information of the system. After that in step 3-20, the metrics is defined for determination in view of the dimensions and/or the index number. Also the target values can be defined 3-30, which is proceeded in this model after receiving the metrics. The target values can be defined for each quantities, for the dimensions and for the index number, or only for some of these objects. After defining the metrics and the target values, analysis is made 3-40 based at least partly on the selected algorithms. For a continuous improvement or for one or more iteration rounds, a signal 3-50 can be fed back e.g. to the system modelling block 3-10.

All the metrics, the target values and the algorithms or one or some of them can either be predetermined or they can be determined during the index number calculation process.

Figure 3 shows, in other words, a flow chart that describes one embodiment of the process that can be used in the metrics and analysis 1-60 layer in order to establish the value that represents the quality of an information system. The value can also be called an index number.

In establishing the value or the index number, different steps are followed. There can be more steps than disclosed in the following or one or more of the following steps can be in a different order. The steps can comprise 1) system modelling 3-10, where the information system under monitoring is inspected to an extent in order to find out how IS in question creates business value i.e. what affects the quality of the system. This step can also involve defining four dimensions, together representing a value of the information system; 2) defining one or more metrics, also called the meters, 3-20 to each dimension, said meters each representing one factor of the dimension and the meters for each dimension together representing a realization of said dimension to measure the quality of IS; 3) defining target values 3-30 for said dimensions and each meter, this step also including defining weight values for each of these target values; and 4) carrying out analysis 3-40 based on data or information of the information system received from many different sources, in order to calculate the value that represents the quality of the information system by using one or more algorithms.

The process is iterative 3-50 in nature, thus, allowing continuous improvement in the process and its output. E.g. in one embodiment, the target values of the meters can change, the weight values of the meters can change, and the weight values of the dimensions can change in real time.

As shown in Figure 2, in establishing the index number 2-224 data, which can be real time data, related to the quality of the information system is received from one source by each meter. This means that every, or almost every meter receives data from a different source or two or more meters receive data from the same source. The one source can be e.g. user satisfaction and a tool being calculated one figure from this source. Many sources can comprise e.g. the productivity of the testing being provided test cases per unit time or the number of testers per the same time unit. The combination of data produces by the two meters or tools can be combined in this step.

If the meters receive information from the same source they can receive the same or different data. A meter outputs a quantity 2-230 based on the received data. After the receiving steps, a ratio of the meter quantity to the target value for each meter can be calculated. Also a dimension-specific index number 2-212 for each dimension from the ratios of the meters can be calculated. The calculation can be carried out by using a first mathematical algorithm 2-232 e.g. an average value from the weighted quantity ratios of the quantities assigned to the dimension. The dimension-specific index number can be weighted to obtain a weighted dimension-specific index number, after which from the weighted dimension-specific index numbers one value 2-224 can be calculated by a second mathematical algorithm or a method 2-220. The first and the second algorithms, methods, or equations can be the same algorithms, methods, or equations e.g. average value calculation.

The index number 2-224 represents the quality of the information system, and is thus a commensurable value of all the data - both technical and non-technical - used in the measurement. Finally, this value can be updated in real-time to obtain a continuous and/or a hierarchical result reflecting the quality of the information system. The updated value can then be used for checking the performance of the information system.

The update can be made e.g. always after new data is received by the data warehouse. Thus, the effect of the update can be visualized as a function of time. It is also possible that the value is updated without new data, so that the only changing parameter is simply time and/or a change in the metrics and analytics layer such as a change in a target value of a meter.

As described, each dimension has one or more meters that measure a characteristics or a feature of the information system. Each meter can also have a predefined value range that represents one quantity. If the mean value or the median value of the dimension-specific index numbers of all dimensions is 100% of the set target values for the dimensions, the index number is 1 if the algorithm 2-220 is an average value algorithm. On the other hand, following the same case, if the said mean value or the median value is 75% of the set target values, the index number is 0.75. Furthermore, if the said mean value or the median value is 225% of the set target values, the index number is 2.25, and the information system creates more value than is planned.

It is to be noted that a first meter can measure a characteristics or a feature of the information system once a month, a second meter can measure a characteristics or a feature of the information system once an hour, and a third meter can measure a characteristics or a feature of the information system once in a second. Thus, each meter has its own measurement period, which at least partly defines, how often measurement data is available.

If the quality of the information system is to be defined with four dimensions, these dimensions are defined. Also, one or more meters or metrics are defined to each dimension with one or more target values and one or more weight values. In an example, said four dimensions A, B, C, D each have a meter A1, B1, C1, and D1, respectively. Meter A1 is measuring weight with a target value of 100kg, meter B1 is measuring velocity with a target value 100km/h, meter C1 is measuring temperature with a target value 100 degrees C, and meter D1 is measuring length with a target value 100 cm. All of the meters have weight value of 1. At a measuring moment t, the velocity is 95 km/h and all the other meters are at their target values. The index number of the quality of the information system can be calculated as an average value with or without weighting. Without weighting A=100%, B=95%, C=100% and D=100%. The average value is 98.75% and when divided by 100, the obtained index number is 0.9875. Because the number is under 1, it can be noted that the planned value is not fulfilled.

If the system provides more value than what is planned, i.e. it is of higher quality than intended, the target values in the QI system can be set higher. Also different time limits and time periods can be defined for the target value. In one embodiment, when the time limit has been reached meaning that the target value has maintained its value during the whole time period, the apparatus of the invention can recommend changing the target value of the meter of the system. This recommendation can produce e.g. an audio visual signal. The change can be e.g. pre-programmed or it can be seen and changed from a dashboard view. This executes the principle of continuous improvement meaning that the method and apparatus help in continuous improvement of the information system and in increasing the efficiency and effectiveness of the information system. It can be said that continuous improvement is an ongoing effort to improve products, services and processes, and that these efforts can seek an incremental improvement over time or a breakthrough improvement all at once.

In summary, a large amount of data is collected and received from one or more information technology systems by different tools. Data is collected and received in different measurement frequencies, also in real time, if needed. The such collected and received information can be structured, possibly analysed and stored to a data warehouse layer. After that the stored information can be retrieved according to the dimensions, e.g. four dimensions. The retrieved values can be weighted and made commensurable by generating an index value and by comparing to one or more target values. The real time index value and its development e.g. in a function of time can be used in many different applications. Moreover, it can be presented in a simple and effective way on a single report view instead of a plurality of tool views, as is often done in the prior art systems. The updated value can be used to describe the state of the quality of the information system. If there is a need to interfere to a subsystem of the information system or even to a single factor of the quality, it can now be done in a more efficient, effective, and rapid way.

This data, information and value obtained can be used to control different systems like an e-commerce system, directly or indirectly.

The advantage of the invention and its embodiments is that now the business value created by an information system can be defined and established in a structured way. Different measurement data, which can be measured in different frequencies from different measurement tools, i.e. information of different types and from different sources, can now be combined and made commensurable. The information can be from technical and non-technical sources, and being measured automatically, semi-automatically, or manually. The above mentioned method now provides means for this. The method supports proactive decision-making. That is, instead of waiting for problems to appear in order to address them, being reactive, one can plan ahead and anticipate problems. In other words, it is possible to influence the characteristics or the feature of the information system before a problem is developed.

To be able to see an easily readable and outlined general view of the quality of the information system, the measurement data can now be fed to a single report view instead of lots of different tool-specific views, as is the case in the prior art tools. Thus, a measuring instrument designed to produce a particular form of graph for representing the measured information is obtained. Also, the information contained in a message of the view can be displayed on a device as a user interface concerning internal states of the information system. The user interface can present a combination of different input data from different sources measured at different times and time periods. The invention and its embodiments also provide a computer-implemented data structure embodied on a medium for efficient data processing and reduced signalling load in a system.

As described above, the present invention relates to information systems and more particularly to a method, an apparatus, and a system of determining quality of an information system.

In the methods of the invention and its embodiments, data needed for valuing quality of an information system is obtained. Data can be provided by receiving 2-44 data and/or information either from the information system or directly from the users or from both of them, and obtaining from the received data and/or information, values for at least two dimensions together representing the quality of the information system and each dimension being measured by one or more meters. The obtaining can comprise at least the following: measuring by a first meter 1-61...1-64 a first quantity value whose magnitude is indicated by a first measurement unit, and measuring by a second meter 1-61...1-64 a second quantity value, whose magnitude is indicated by a second measurement unit, the second measurement unit being different from the first measurement unit. Then the measured quantity values can be stored 2-60 to a data warehouse 1-50. The measuring by the first meter and by the second meter can be said to be measuring by the meter in the dimension. It is to be noted that the storing step can occur before the calculation related to the dimensions.

The first meter measuring a first quantity value whose magnitude is indicated by a first measurement unit, and the second meter measuring a second quantity value, whose magnitude is indicated by a second measurement unit, the second measurement unit being different from the first measurement unit can be located either on the tools layer or on the metrics and analytics layer or on both of the layers. In one embodiment, the some of the meters can locate on the tools layer and some of the meters on the metrics and analytics layer.

The meters can be located and shown in Figure 1a in the QI metrics and analysis layer block 1-60 like separate blocks within each of the dimensions 1-60.

In the method of establishing the quality of an information system, in the first phase, data and/or information comprising measured values of quantities can be obtained 2-88. This obtaining step can comprise obtaining data and/or information either from the information system, directly from the users, or from the data warehouse or from some or all of them. After that, in the second phase, different quantities can be made commensurable by performing at least the following steps for each quantity: determining a quantity target value; determining a quantity weight value; calculating a ratio of the measured quantity value to the quantity target value; and weighting the calculated ratio with the quantity weight value to obtain the weighted quantity ratio.

At least one of the quantity weight values and/or one of the index weight values can be obtained by statistical analysis based on the history data of the information system to be valued or based on the history data of all valued information systems or based on external benchmark information.

E.g. if the weight value or the target value is 0.75 as mathematically calculated, but the history data presents a better value of 0.9, or a value that can make the measurement more accurate, the latter value can be used. It is thus possible to replace a first weight or target value by a second weight or target value obtained e.g. by statistical analysis.

The index number target value can be set as 1.

In the third step, at least the following steps for each dimension of at least two dimensions together representing the quality of the information system can be performed: assigning quantities for the dimension; and calculating an index number using an algorithm e.g. an average value from the weighted quantity ratios of the quantities assigned to the dimension.

Finally in the fourth step, the quality value of the information system can be calculated by performing at least the following steps: determining an index weight value for each dimension; weighting the calculated index number of each dimension with the corresponding index weight value to obtain a weighted index number for the dimension; calculating from the weighted index numbers of all dimensions one value using an algorithm 2-220; outputting 2-92 the one value for representing the quality of the information system.

These steps and their sub steps can be processed in this order or in a different order. E.g. the target values can be defined before the measurements.

Data can be obtained by requesting 2-84 data from a data warehouse 1-50 and/or directly from the information system in real time by: measuring by a first meter or by a first tool 1-31... 1-35, 1-39 a first quantity value whose magnitude is indicated by a first measurement unit; and by measuring by a second meter 1-31... 1-35, 1-39 a second quantity value, whose magnitude is indicated by a second measurement unit, the second measurement unit being different from the first measurement unit

The requesting of data can always occur via or through the data warehouse. When data warehouse is used, different trends and history data can be presented. The requesting and/or presenting of data and information can be in real time. Also previously used data can be requested and/or presented.

If the number of dimensions together representing the quality of the information system is four, the dimensions can be technical quality, process quality, perceived quality and business quality. If the number of dimensions together representing the quality of the information system is e.g. two, two of said dimension can be used. Also other dimensions or combinations of these dimensions can be used.

The one value of the information system can be updated by obtaining a further value of the quantity, comparing the further or the next or the following value of the quantity to a previously used value of the same quantity and if the further value of the quantity is different than the previously used value of the same quantity, updating the one value.

The updated one value can be used for many purposes. These comprise e.g. checking the performance of the information system, isolating the meter measuring the quantity whose measured value is lower or higher than the quantity target value; and providing a signal from the isolated meter. The signal can be e.g. short message, a tone, a visual signal, or their combination. This signal can then be used in the decision making process or it can be directly used in the process of making the measured system or its subsystem more efficient.

The invention comprises also an apparatus comprising means for implementing a method as claimed in any of the method steps. The apparatus can comprise at least one processor; and one memory including computer program code, wherein the at least one memory and the computer program code are configured to, with the at least one processor, provide the means for implementing. The invention also comprises a computer program product comprising program instructions adapted to perform any of the steps of a method as, when the computer program is run. A system of the invention comprises at least a first apparatus comprising means for performing any of the first group steps of the method and a second apparatus comprising means for performing any of the second group steps of the method.

The apparatus of valuing quality of an information system can comprises means for obtaining 2-88 data comprising measured values of quantities; means for commensurating or making commensurable different quantities by performing at least the following steps for each quantity:
- determining a quantity target value;
- determining a quantity weight value;
- calculating a ratio of the measured quantity value to the quantity target value; and
- weighting the calculated ratio with the quantity weight value to obtain the weighted quantity ratio;
means for performing at least the following steps for each dimension of at least two dimensions together representing the quality of the information system:
- assigning quantities for the dimension; and
- calculating an index number by a first mathematical algorithm from the weighted quantity ratios of the quantities assigned to the dimension; and
means for calculating the quality of the information system by performing at least the following steps:
- determining an index weight value for each dimension;
- weighting the calculated index number of each dimension with the corresponding index weight value to obtain a weighted index number for the dimension;
- calculating by a second mathematical algorithm from the weighted index numbers of all dimensions one value;
means for outputting 2-92 the one value; and
means for valuing the quality of the information system by using the one value.

Said device can also comprise means for obtaining 2-88 data by requesting 2-84 data from a data warehouse 1-50 and/or directly from the information system in real time by:
- means for measuring by a first meter 1-31... 1-35, 1-39 a first quantity value whose magnitude is indicated by a first measurement unit; and
- means for measuring by a second meter 1-31... 1-35, 1-39 a second quantity value, whose magnitude is indicated by a second measurement unit, the second measurement unit being different from the first measurement unit.

It is thus possible to describe the quality of the information system as a one clear figure and as a function of time in real time. The updated value is used to describe the development of the quality value and to define, whether there is a need to intervene in the functioning of the information system or a subsystem of said information system. Furthermore, by using the method, it is possible to tackle a problem in a specific part of or in one or more features of the information system In case of the subsystem or the whole specific information system not functioning properly in terms of one or more technical and/or non-technical features/characteristics, it is now easy to make a decision to e.g. make corrective actions or even to discontinue the system based on information rather than intuition. This would be very time consuming and resource consuming according to prior art methods.

This leads to many direct benefits e.g. to the decrease of the signalling needs to the system and from the system, which in turn decreases the signalling load of the system and even increases the capability of the system. The capability of the system increases also because now the delays of the system are minimized or the performance of the system can be optimized ion real time. Decisions on corrective actions can now be made in real time or even proactively. E.g. an e-commerce system can be open 24/7, but also the software development of said store advances in a way pursued by the business, and the users of said store are satisfied to the usability of the system.

The invention and its embodiments bring also other benefits, e.g. to the network planning and management system. The working time of communication links and network nodes can now be increased, in which e.g. communication availability, different network equipment needs and specifications and even business plans can be taken into account.

It will be obvious to a person skilled in the art that, as the technology advances, the inventive concept can be implemented in various ways. The invention and its embodiments are not limited to the examples described above but may vary within the scope of the claims.

## Claims

1. A method of obtaining data needed for valuing quality of an information system, **characterized by**
receiving (2-44, 2-54) data from the information system;
obtaining from the received data for at least two dimensions together representing the quality of the information system and each dimension being measured by one or more meters, the obtaining comprising at least the following:
- measuring by a first meter a first quantity value whose magnitude is indicated by a first measurement unit;
- measuring by a second meter a second quantity value, whose magnitude is indicated by a second measurement unit, the second measurement unit being different from the first measurement unit; and
storing (2-60) the measured quantity values to a data warehouse (1-50).

2. A method of valuing quality of an information system, **charac - terized** by
obtaining (2-88) data comprising measured quantity values;
making commensurable different quantities by performing at least the following steps for each quantity:
- determining a quantity target value;
- determining a quantity weight value;
- calculating a ratio of the measured quantity value to the quantity target value; and
- weighting the calculated ratio with the quantity weight value to obtain a weighted quantity ratio;
performing at least the following steps for at least two dimensions together representing the quality of the information system, each dimension having one or more assigned quantities:
- calculating an index number by a first mathematical algorithm from the weighted quantity ratios of the quantities assigned to the dimension; and calculating the quality of the information system by performing at least the following steps:
- determining an index weight value for each dimension;
- weighting the calculated index number of each dimension with the corresponding index weight value to obtain a weighted index number for the dimension;
- calculating by a second mathematical algorithm from the weighted index numbers of all dimensions one value;
outputting (2-92) the one value; and
valuing the quality of the information system by using the one value.

3. A method according to claim 2, **characterized by** obtaining (2-88) data by requesting (2-84) data from a data warehouse (1-50).

4. A method according to claim 2 or 3, **characterized by** obtaining (2-88) data directly from the information system in real time by:
- measuring by a first meter a first quantity value whose magnitude is indicated by a first measurement unit; and
- measuring by a second meter a second quantity value, whose magnitude is indicated by a second measurement unit, the second measurement unit being different from the first measurement unit.

5. A method according to any one of claims 2 to 4, **characterized by** obtaining at least one of the quantity weight values and/or one of the index weight values by statistical analysis based on the history data of the information system to be valued or based on the history data of all valued information systems or based on external benchmark information.

6. A method according to any one of the preceding claims, **characterized in that** the number of dimensions together representing the quality of the information system is four.

7. A method according to claim 6, **characterized in that** the dimensions are technical quality, process quality, perceived quality and business quality.

8. A method according to any one of the preceding claims, **characterized by** updating the one value of the information system by
obtaining a next value of the quantity;
comparing the next value of the quantity to a previously used value of the same quantity; and
if the next value of the quantity is different than the previously used value of the same quantity, updating the one value representing the quality of the information system.

9. A method according to claims 2 to 8, **characterized by** using the updated one value for checking the performance of the information system, by
defining a target value for the index number
calculating the value for index number from the weighted ratios of quantities;
comparing the calculated index value to the target index value; isolating the meter measuring the quantity whose measured value is lower or higher than the quantity target value, if the calculated index value is lower or higher than the target index value; and
providing a signal from the isolated meter for decision making process.

10. A method according to claim 9, **characterized by** decreasing the response time or increasing usability of the information system in response to the isolating step.

11. An apparatus of valuing quality of an information system, **characterized by** comprising means for implementing a method as claimed in any of claims 1 to 10.

12. An apparatus as claimed in claim 11, the apparatus comprising at least one processor; and one memory including computer program code, wherein the at least one memory and the computer program code are configured to, with the at least one processor, provide the means for implementing.

13. A computer program product comprising program instructions adapted to perform any of the steps of a method as claimed in any one of claims 1 to 10 when the computer program is run.

14. System for valuing quality of an information system, **characterized by** comprising:
one or more meters (1-30) for receiving (2-44) data from the information system, the receiving comprising at least the following:
- measuring by a first meter a first quantity value whose magnitude is indicated by a first measurement unit;
- measuring by a second meter a second quantity value, whose magnitude is indicated by a second measurement unit, the second measurement unit being different from the first measurement unit;
data warehouse (1-50) for receiving and for storing (2-60) the measured quantity values to a data warehouse (1-50);
analysis tools (1-60), comprising:
means for obtaining (2-88) data comprising measured quantity values;
means for making commensurable different quantities by performing at least the following steps for each quantity:
- determining a quantity target value;
- determining a quantity weight value;
- calculating a ratio of the measured quantity value to the quantity target value; and
- weighting the calculated ratio with the quantity weight value to obtain the weighted quantity ratio;
means for performing at least the following steps for at least two dimensions together representing the quality of the information system, each dimension having one or more assigned quantities:
- calculating an index number by a first mathematical algorithm from the weighted quantity ratios of the quantities assigned to the dimension; and means for calculating the quality of the information system by performing at least the following steps:
- determining an index weight value for each dimension;
- weighting the calculated index number of each dimension with the corresponding index weight value to obtain a weighted index number for the dimension;
- calculating by a second mathematical algorithm from the weighted index numbers of all dimensions one value;
means for outputting (2-92) the one value; and
means for valuing the quality of the information system by using the one value.
